# EUROPEAN PATENT SPECIFICATION

(11) **EP 2 625 017 B1**
(45) Date of publication and mention of the grant of the patent: **26.09.2018**
(21) Application number: 11770657.2
(22) Date of filing: 07.10.2011
(51) Int. Cl.: B29C 45/18, B29B 7/94, B67D 7/62

(54) **METHOD AND DEVICE FOR DISPENSING LIQUIDS FROM A CONTAINER COUPLED TO AN INTEGRATED PUMP CAP**
VERFAHREN UND VORRICHTUNG ZUR AUSGABE VON FLÜSSIGKEITEN AUS EINEM AN EINE INTEGRIERTE PUMPENKAPPE GEKOPPELTEN BEHÄLTER
PROCÉDÉ ET DISPOSITIF DE DISTRIBUTION DE LIQUIDES À PARTIR DE CONTENANT COUPLÉ À UN CAPUCHON DE POMPE INTÉGRÉ

(30) Priority: 08.10.2010 US 391549 P
(43) Date of publication of application: 14.08.2013
(60) Divisional application: 16189824.2
(73) Proprietor: 3M Innovative Properties Company, St. Paul, MN 55133-3427 (US)
(72) Inventor: CENTOFANTE, Charles A.,, Saint Paul, Minnesota 55133-3427 (US); BOOTHMAN, Brian S.,, Saint Paul, Minnesota 55133-3427 (US)
(74) Representative: Vossius & Partner Patentanwälte Rechtsanwälte mbB
(86) International application number: PCT/US2011/055184
(87) International publication number: WO 2012/048172

(56) References cited:
- EP-A1- 1 806 314
- DE-U1-202005 015 569
- FR-A1- 2 672 279
- US-A1- 2003 000 964
- US-A1- 2004 191 086
- US-A1- 2005 052 945
- US-B1- 6 254 363

## Description

### BACKGROUND

This specification relates to dispensing liquids.

Many processes require liquids to be dispensed. Liquids can be dispensed in many ways from manual pouring to using mechanical pouring devices. Many conventional techniques for dispensing liquids can have problems with accuracy and spilling.

Injection molding machines are used to form plastic articles of various shapes and colors. To create colored plastic articles, injection molding systems typically use pre-colored pellets or beads of plastic resin as a base material that correspond to the color of the final molded plastic article. The pre-colored plastic resin is melted and then injected into a mold in order to form the molded plastic article in the desired color.

US 2004/0191086 A1 discloses a disposable cartridge for a fluid delivery system comprising a fluid reservoir integral with and supported by a pump housing, a peristaltic pump mounted within said pump housing, and a length of flexible tubing having a first end arranged in flow communication with said fluid reservoir, an accessible second end, and a central portion operatively engaging said peristaltic pump so that consecutive portions of said flexible tubing are successively collapsed to thereby propel fluid within said passageway through said tubing so as to exit said second end. The peristaltic pump is integrated into the bottom of the fluid reservoir.

DE 20 2005 015 589 U1 relates to a dosing device for additives for a polyurethane plant comprising an exchangeable cartridge and a drive module which is able to be coupled with the cartridge, wherein the cartridge has a receptacle for the additive, an arrangement for supplying the receptacle with compressed air, which is able to be connected to a pressure supply arrangement, and a piston dosing device which is able to be brought in flow connection with the receptacle and is connected or connectable with a discharge nozzle. The piston dosing device is able to be detachably coupled with the drive module, and the drive module is used to operate the piston dosing device.

EP 1 806 314 A1 discloses a device for dispensing a beverage with a controlled air inlet according to the preamble of claim 1. US4187959A1 discloses a device comprising a liquid container with a lid and an integrated pump cap with a magnetic motor coupler, wherein the liquid container comprises an outer container and an inner liner which collapses upon withdrawal of the product stored therein.

### SUMMARY

This specification describes technologies relating to dispensing liquid materials In general, one innovative aspect of the subject-matter described in this specification is embodied in a device according to claim 1. Another innovative aspect is embodied in a system according to claim 2. Another innovative aspect is embodied in a method for dispensing a specified amount of liquid according to claim 3.

These and other embodiments may each optionally include one or more of the following features. The container may contain a vent to equilibrate the pressure inside the container with atmospheric pressure when the vent is open. Alternatively, the container, when coupled to the pump cap, may form a closed system (i.e, a system that does not have a vent). The container may be sufficiently flexible that, when incorporated into a closed system, the container collapses as liquid is pumped from the container.

The container comprises more than one component, an outer container that may be rigid and an inner liner that may be flexible.

The outer container may contain an air hole that is remains open or an air hole that can be open and closed with, for example, a strip of tape or a valve. The inner liner will collapse as liquid is pumped from the container.

A variety of pumps may be incorporated into the integrated pump cap such as a G-rotor pump, a peristaltic pump, a syringe pump, or an elastomeric diaphragm pump.

Particular embodiments of the subject matter described in this specification can be implemented so as to realize one or more of the following advantages. According to the invention, an integrated pump cap allows for precise amount of liquids to be dispensed in a controlled manner. Leaking is reduced as well as limiting the risk of under pouring or over pouring liquids. A disposable container including the integrated pump cap allows for easy cleanup and reduces contamination of the dispensed liquid. The integrated pump can be formed from plastic materials to achieve a lower manufacturing cost and to allow for easy disposability but if the nature of the materials to be pumped or other circumstances warrant, the integrated pump can be formed of metal, or a combination of metal and plastic components.

Injection molding of colored plastics using liquid colorants can reduce molding costs. A neutral base material can be used for all colors so molders do not need to maintain a number of different colored base materials. Additionally, color quality can be improved by eliminating the heat history from reheating colored base plastic material that has already been melted for coloring. Also using a liquid colorant directly eliminates additional processing, for example drying pre-colored base plastic materials, thereby saving the time and cost to dry the base material.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example dispensing system.
FIG. 2 shows an example liquid container with an integrated pump cap.
FIG. 2A shows an exploded view of an example liquid container with an integrated pump cap.
FIG. 3 shows a view of an example integrated pump cap.
FIG. 4 shows a cutaway view of the example integrated pump cap.
FIG. 5 shows another cutaway view of the example integrated pump cap.
FIG. 6 shows a cross-sectional view of the example integrated pump cap.
FIG. 7 shows a flow diagram of an example process for dispensing liquids.
FIG. 8 shows a block diagram of an example injection molding system.
FIG. 9 shows a flow diagram of an example process for dispensing colorants in an injection molding system.

Like reference numbers and designations in the various drawings indicate like elements.

### DETAILED DESCRIPTION

An integrated pump cap for a container allows for precise dispensing of liquid from the container while reducing risks of spillage and contamination. A variety of liquids having a wide range of viscosities may be dispensed by the pump including adhesives, cements, colorants, coatings, detergents, epoxies, dyes, fillers (e.g., body filler), nano-materials, oils, paints (e.g., automotive paints), pastes, pigments, polymer additives (which may be organic or inorganic), sealants, stains, toners, varnishes, waxes, and the like. The liquids may be neat (including concentrates) or in the form of a dispersion, solution or suspension.

A drive motor can be coupled to the integrated pump cap in order to dispense a specified amount of liquid. In some implementations or embodiments, a G-rotor pump is integrated into the cap of a container in order to pump the liquids, in response to the driving motor, from the container. However, many other types of pumps may be readily integrated into the cap depending on the nature of the material to be pumped and other application-specific considerations (e.g., cost, efficiency, accuracy, size, weight, whether moving parts can be incorporated into the cap or should be isolated away from the cap, etc.) such as a peristaltic pump, a syringe pump, or an elastomeric diaphragm pump.

In some implementations, liquid colorants are dispensed into an injection molding device in order to produce colored plastic articles but other types of molding devices may be used too including blow molding, injection blow molding, extrusion molding, and rotational molding devices for example. In particular, a neutral plastic base material (e.g., pellets or beads of plastic resin) can be heated by the molding device. Advantageously, the plastic base material may possess its "natural" color (i.e., the inherent color of the plastic resin without the addition of dyes, pigments or other colorants). The plastic base material may be white, beige, grey, or other neutral color and it may be transparent, translucent or opaque. A precise amount of a liquid colorant can be dosed into the neutral plastic base material so that the melted plastic base material is colored accordingly. The amount of colorant will vary depending on the nature of the plastic base material, the colorant, the desired color, etc. but an amount of about 0.5%- 3% by weight or volume is generally useful. The colored melted plastic is then delivered by injection or extrusion into a mold cavity or an extruder head having the shape or profile of the plastic article that is to be formed which could be, for example, a bottle, a film, or many other products conventionally produced by plastic molding devices. While the invention will be particularly described in the context of a dispenser for delivering liquid colorant to a molding device, this is merely to illustrate one preferred application. The invention disclosed herein may be used to dispense a variety of liquids as previously described and the dispensed liquid may be delivered to devices other than molding devices (e.g., a mixing or blending device or a device that fills a container) or may be delivered for immediate end use (e.g., a sprayed liquid or an extruded paste).

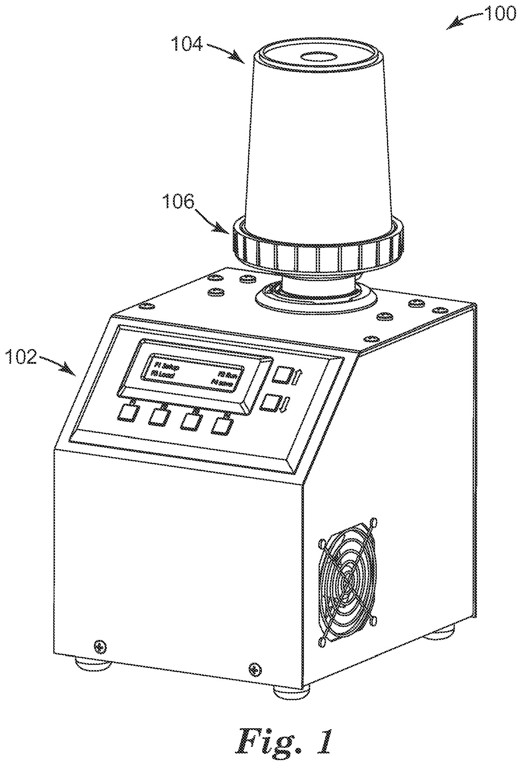

FIG. 1 shows an example of a dispensing system 100. The dispensing system includes a motor base 102 and a container 104 with an integrated pump cap 106. The motor base 102 includes a motor (not shown separately) for driving the pump contained in the integrated pump cap 106. The motor can be an AC or DC electric motor (e.g., a stepper motor, servo motor, etc.) configured to drive a driveshaft that engages the integrated pump cap 106. Alternatively, the motor can be pneumatic, hydraulic, piezo-electric, mechanical (e.g., using a rack and pinion, crankshaft, cam or other similar mechanism), or hand-driven, provided that it is configured to transfer energy to a driveshaft that engages the integrated pump cap 106. For simplicity and ease of design, it is preferred to have the motor transfer rotational energy to the driveshaft but linear energy transfer can be used too.

The motor base 102 can also include a programmable controller, either as a separate unit or as part of the motor itself, such that particular commands can be input in order to, for example, release a specified amount of liquid according to the command. The amount can be according to the weight of the liquid dispensed. For example, one command can cause the motor to operate such that one gram of liquid is dispensed. A second command can cause the motor to dispense two grams of liquid and so on. Thus, a particular liquid can be dispensed in different amounts depending on the application. For example, different liquid colorant amounts can be dispensed depending on the desired color and the amount of plastic material that is to be colored. In some other implementations, motor commands may be calibrated to dispense a liquid by volume rather than by weight (e.g. a programmed number of milliliters).

The controller can calculate motor driving time based on a specific flow rate of the pump for a given motor speed. This can depend on the particular liquid being dispensed (e.g., as a function of the viscosity of the liquid). Thus, the motor speed and flow rate can be used to calculate a motor run time to dispense a specified amount (weight or volume) of the liquid.

The motor base 102 can include an interface for entering commands, e.g., for particular liquid dispensing. For example, one or more interface controls can allow the user to specify a particular command using menus, command codes, or a combination of both (e.g., using buttons, touch screen interface, or other input).

Alternatively, in some implementations, the motor base 102 is coupled to another device that provides a control interface, for example, a computing device. The computing device can include software for both controlling the motor base 102 and providing a user interface. The user interface can allow the user to provide commands for dispensing liquids.

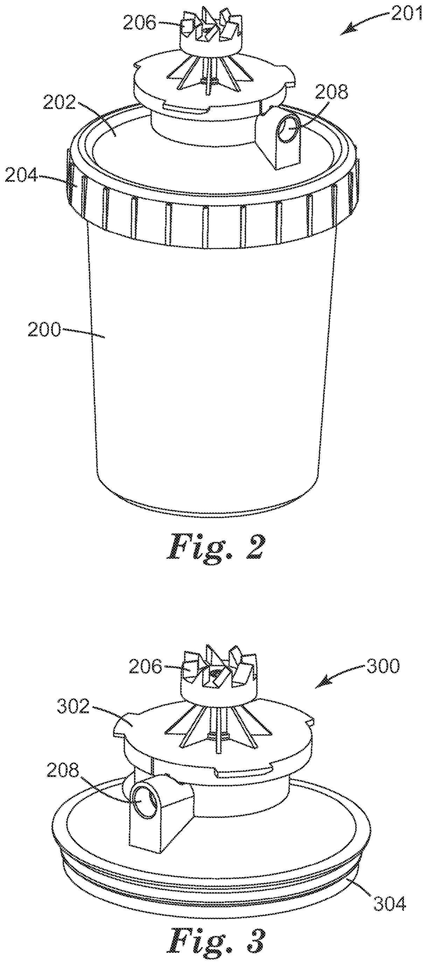

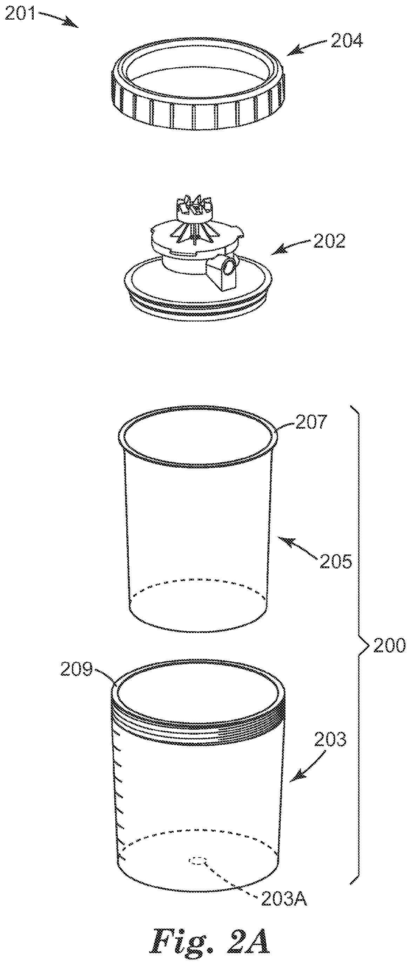

FIGS. 2 and 2A show a view 201 of an example liquid container 200 with an integrated pump cap 202. The liquid container 200 includes a rigid reusable or disposable outer container 203, and a disposable flexible liner 205 positioned within the outer container. The outer container can provide structural stability when transporting the liquid container 200. The outer container can be removably coupled to the integrated pump cap 202, for example, using a threaded ring 204. The threaded ring 204 can be integral to the cap or a separate piece. The threads on ring 204 can be either male or female with the complementary mating threads formed on the outer container. The threaded ring 204 can also be used to maintain the position of the integrated pump cap 202 on the container 200. Although threaded ring 204 is illustrated in FIG. 2 for removably coupling integrated pump cap 202 to container 200, other coupling mechanisms may be employed such as, for example, a bayonet connector, snap tabs or snap wings, and the like, which may be useful for providing a "quick connect" capability. Alternatively, integrated pump cap 202 may be coupled to container 200 by an interference or friction fit between these two components.

The integrated pump cap 202 may be coupled to the rigid outer container 203 or the flexible liner 205. The coupling mechanisms described above are particularly suited for joining the pump to the rigid outer container. Additional stability can be obtained by, for example, forming the liner with a rim 207 at its open end that rests on the upper edge 209 of the outer container 203. Securing the integrated pump cap to the outer container by the techniques mentioned above may compress the rim of the liner between the upper edge of the outer container and the pump cap.

If integrated pump cap 202 is coupled to the flexible liner this may be accomplished by a friction fit between the pump cap and the liner or by sealing pump cap 202 to the liner using, for example, sonic welding or an adhesive.

As shown in FIG. 2A, the outer container 203 may contain an air hole 203A that remains open or an air hole that can be opened and closed with, for example, a strip of tape or a valve. In this way, when the air hole 203A is open, the inner liner 205 may collapse as liquid is pumped from the container thereby facilitating dispensing all of the liquid. Thus, the flexible inner liner in combination with the pump cap provides a sealed liquid container that collapses as the liquid is dispensed. This ventless construction allows for an air tight dispensing that reduces the risk of contamination to the liquid. For example, some liquids can react with oxygen, e.g., liquids that cure when exposed to air. Other liquids can easily be contaminated by particulates in the air which can impair their function and also interfere with the dispensing. The flexible liner can be composed of various flexible materials, for example, low density polyethylene.

The container may be rigid or flexible and may contain a vent to equilibrate the pressure inside the container with atmospheric pressure when the vent is open. A flexible container may be composed of various flexible polymeric materials, for example, low density polyethylene or, if more strength or durability is desired, an EVA (ethylene vinyl acetate) resin such as Elvax®.

The integrated pump cap 202 includes a motor coupler 206 that, in the illustrated embodiment, rotates about a central axis in response to a corresponding rotation of a drive component in the motor base 102 shown in FIG. 1. As shown, the motor coupler 206 includes a number of teeth that can engage a corresponding set of teeth in the motor base 102. Thus, when the motor drives a rotational drive shaft coupled by the teeth to the motor coupler 206, the motor coupler 206 is rotated to drive the pump so that contents of the container 200 can be dispensed through an output port 208. The teeth can be shaped to facilitate transfer of energy from the motor to the pump. Numerous variations on this approach are possible. For example, motor base 102 and motor coupler 206 may have the same number of engagement teeth or a different number of engagement teeth, or they may interact without the use of gears that mesh such as by frictional engagement or magnetic coupling. For simplicity and ease of design, it is preferred to have the motor transfer rotational energy to the driveshaft but linear energy transfer can be used too via, for example, a rack and pinion mechanism. Advantageously, pump cap 202 may be readily disassembled from motor base 102 without using tools so as to facilitate cleaning and installation of a different container 200.

FIG. 3 shows a view of an example integrated pump cap 300 in more detail. The integrated pump cap includes a housing 302, a container coupler 304 (as part of or separate from the housing 302), output port 208, and motor coupler 206. In the embodiment of FIG. 3 and the other embodiments, the integrated pump cap and its constituent parts may be formed from plastic to achieve a lower manufacturing cost and to allow for easy disposability, but if the nature of the materials to be pumped or other circumstances warrant, the integrated pump cap may be formed of metal, or a combination of metal and plastic components.

Referring to FIG.3 as an example, pump cap housing 302 may be formed as a single piece or as a combination of pieces that are removably attached together or that are fixed together (e.g., by sonic welding). For example, a portion of the housing 302 can be a lid configured to fit container 200 (either the outer container or the liner). A portion of the lid can be removed in order to form an aperture in which to couple a pump housing including the pump for dispensing fluid from the container. In some implementations, the pump housing includes a first portion positioned on one side of the lid aperture and a second portion positioned on the other side of the lid aperture, where the two portions are configured to engage in order to lock the portions together and to the lid. An o-ring or other seal or gasket can be positioned between the lid and a portion of the pump housing to prevent liquid leaks. In some alternative implementations, the pump housing is joined to the lid (e.g., by sonic welding or using an adhesive) to bond the pump housing to the lid. In other implementations, the pump housing can be integrally formed with a lid for closing the container.

The container coupler 304 allows the integrated pump cap 300 to attach to the container 200 (FIG. 2). In some implementations (as shown in FIG. 3), the container coupler 304 is in the form of male or female threads that join with complementary threads formed on container 200. In other implementations, the container coupler 304 is configured to provide an interference or friction fit with the container. In still other embodiments, the container coupler 304 may be a bayonet connector, snap tabs, snap wings or the like (with complementary engaging structure formed on the container), which may be useful for providing a "quick connect" capability. Alternatively, the container coupler 304 may be provided as a weld (e.g., a sonic weld) or as an adhesive that joins the pump cap 300 to the container. As described above with respect to FIG. 2, the output port 208 is configured to output liquids from the container as driven by the pump in the pump cap 300. The pump is driven using the motor coupler 206.

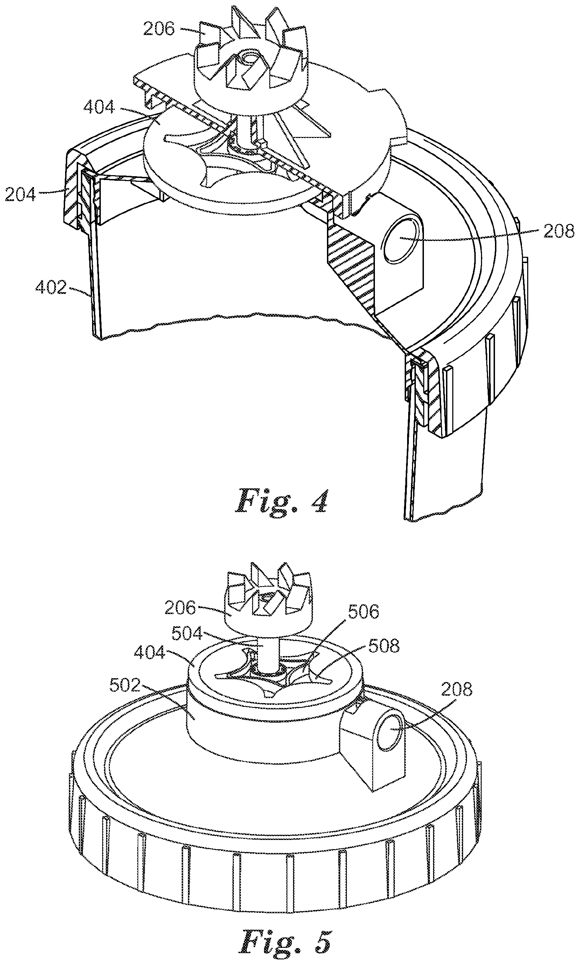

FIG. 4 shows a cutaway view 400 of the example integrated pump cap to illustrate additional details. The cutaway view 400 shows the motor coupler 206, output port 208, a container 402 coupled to the integrated pump cap using thread ring 204, and a partial view of pump 404. In the example integrated pump cap shown in FIG. 4, the pump 404 is a G-rotor pump but as noted above many other types of pumps, including a peristaltic pump, a syringe pump, or an elastomeric diaphragm pump may be used instead.

The pump can be formed from metal, plastic, other materials, or combinations thereof. For example, in some implementations, the pump housing is molded or otherwise fabricated from glass-filled nylon, and the gears are molded or otherwise fabricated from a polytetrafluoroethylne (e.g., Teflon™)-impregnated acetal. As the motor coupler 206 rotates or otherwise moves, the motion is transferred to the pump so that precise amounts of liquid from the container 402 are dispensed through output port 208. In some implementations, the integrated pump cap is mounted to the motor such that the motor coupler 206 is coupled to the motor at a downward orientation; that is, in its use position, the motor coupler is above the motor, as shown in FIG 1. Thus, the container is positioned above the pump 404 such that the liquid is gravitationally directed to an input of the pump 404. However, other embodiments are also contemplated. For example, the integrated pump cap may be mounted so that the motor coupler 206 is coupled to the motor at an upward orientation; that is, in its use position, the motor coupler and container are below the motor. In such embodiments, liquid may be dispensed from the container by pressurizing the container (e.g., pressurizing the space between an outer container and an inner liner), or by installing a siphon tube that extends from output port 208 to the bottom of the container, or by using a bladder that expands to expel liquid from the container.

The exemplary G-rotor pump is described in greater detail with respect to FIG. 5. FIG. 5 shows another cutaway view 500 of the integrated pump cap. In this cutaway view 500, the G-rotor pump 404 is exposed from the top while other portions of a housing 502 are intact. In particular, as shown in FIG. 5, the motor coupler 206 is coupled to a shaft 504. The shaft 504 is further coupled to an inner or first rotor 506. The inner rotor 506 sits off center within and engages an outer or second rotor 508.

In the embodiment of FIG. 5, as the motor coupler 206 is turned by the motor, the shaft 504 rotates. Rotation of the shaft 504 causes the inner rotor 506 to rotate within the outer rotor 508. The outer rotor 508 has more slots than the number of rotor lobes on the inner rotor 506 such that the inner rotor 506 rotates in an eccentric manner with the outer rotor 508. This rotation is such that in a first position an input port is exposed allowing fluid to flow from the container into a space between the lobes of the inner rotor 506. As the inner rotor 506 and outer rotor 508 continue to rotate, an output is exposed between the lobes and the liquid is pushed out of the pump through output port 208. The outer rotor 508 revolves at a slower rate than the inner rotor 506, thereby rotating and changing the volume of the chambers created by the slots.

In some implementations, the pump is reversible allowing liquids to be pumped from outside the container through the output port 208 (which in this configuration may be regarded as an input port) and into a container. In some other implementations, the pump is non-reversible such that liquids can only be pumped out of the container.

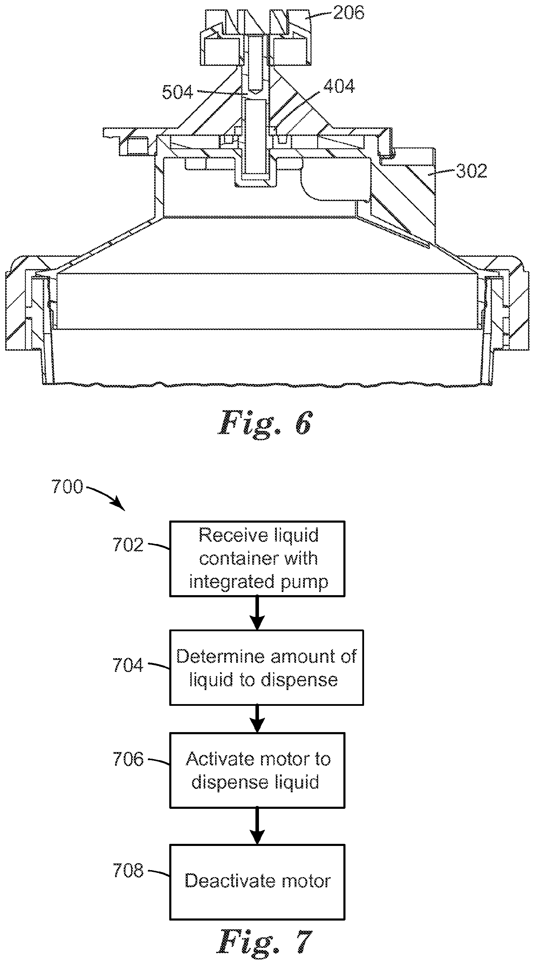

FIG. 6 shows a cross-sectional view 600 of the exemplary integrated pump cap in more detail. The cross-sectional view 600 illustrates the motor coupler 206, shaft 504, G-rotor pump 404, and housing 302. The G-rotor pump 404 is disk shaped from the side and is intersected by the shaft 504 off-center. In particular, the outer rotor 508 (FIG. 5) is intersected off-center while the inner rotor 506 (FIG. 5) is intersected by the shaft 504 substantially in the center. This off-center drive shaft 504 allows for the eccentric rotation of the G-rotor pump components.

FIG. 7 shows a flow diagram of an example process 700 for dispensing liquids. For convenience, the process 700 will be described with respect to a dispensing system that performs the process 700.

The dispensing system receives a selected liquid container with an integrated pump (702). For example, the dispensing system can be used to dispense a number of different liquids including any of those mentioned hereinabove. As such, the liquids and their respective containers can be interchanged. For example, for liquid colorants, different colors can be used with the dispensing system in order to provide different colors. Similarly paints can be dispensed for use alone or different colored paints can be dispensed and mixed together to form a blended color.

Receiving a selected liquid container can include coupling the liquid container with the integrated pump to a motor. The motor can include a drive shaft coupler configured to receive a motor coupler of the integrated pump. Additional couplings can also be performed. For example, an output port of the integrated pump can be coupled to a destination (e.g., a container, machine, or other location), for example, with a tube or other liquid pathway.

The dispensing system determines an amount of liquid to dispense (704). The amount to dispense can be determined, for example, in response to a user input to an interface of the dispensing system. In particular, the user can input a specific time to dispense, amount to dispense, or a command code that corresponds to a specific programmed amount to dispense. The input command code can be specific to the liquid to be dispensed. Alternatively, or additionally, the input command code can be specific to the application of the dispensed liquid (e.g., an amount necessary to color a particular volume of neutral colored plastic in an injection molding apparatus).

The dispensing system activates a motor to dispense liquid (706). In particular, the motor is activated in order to drive the integrated pump. The motor rotates or otherwise moves a drive shaft that causes a corresponding rotation or other movement of the integrated pump components such that precise amounts of fluid are dispensed as a function of the motor speed, pump configuration, and liquid being dispensed.

The dispensing system deactivates the motor to finish dispensing liquid (708). When the specified amount of liquid has been dispensed, the motor is deactivated to stop the integrated pump. Alternatively, the dispensing system can be calibrated to account for any residual liquid between the pump output and the destination (e.g., in a dispensing tube) that will be released so that substantially the exact amount of liquid is dispensed once the motor is deactivated. The dispensed liquid can then be used for various applications.

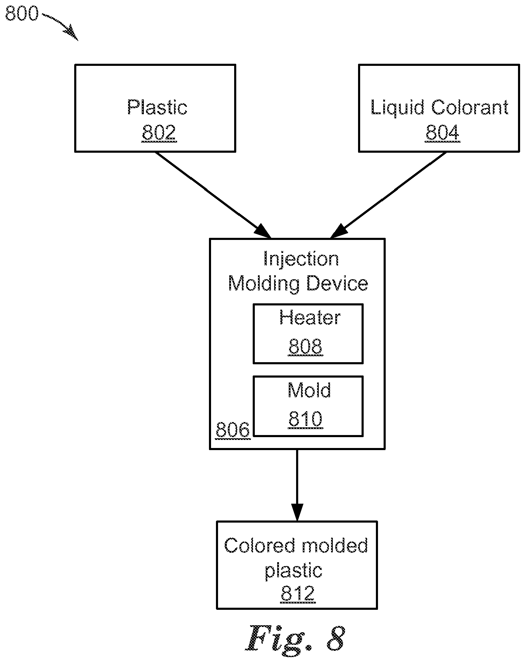

FIG. 8 shows a block diagram of an example injection molding system 800. The injection molding system 800 includes base plastic material 802 (e.g., beads or pellets of a resin in a hopper) and liquid colorant 804 or other liquid (e.g., in a container including an integrated pump for dispensing precise amounts of liquid as described above).

The plastic material 802 and liquid colorant 804 are provided to an injection molding device 806. The injection molding device 806 includes a heater 808 and a mold 810. The heater 808 melts the plastic material 802 and into which the liquid colorant 804 can be added. The melted plastic material 802 can be injected into the mold 810. The mold has a shape formed within the mold cavity corresponding to a desired output colored molded plastic 812. Other molding systems may be used and their operational principles can be understood from the block diagram of FIG. 8 too. For example, injection molding device 806 may be a blow molding, an injection blow molding, an extrusion molding, or a rotational molding device and mold 810 may be provided by an extrusion die or head to yield a plastic component having a desired profile.

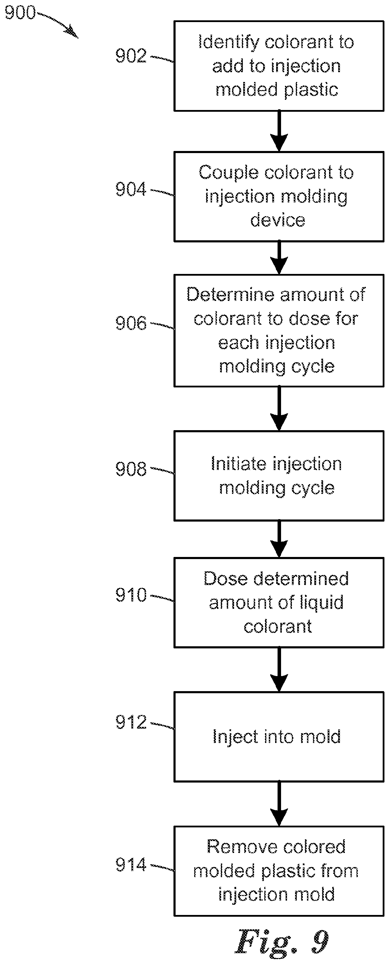

FIG. 9 shows a flow diagram of an example process 900 for dispensing colorants in an injection molding system. A colorant is identified to add to injected molded plastic in order to produce molded plastic of a particular color (902). The colorant is coupled to an injection molding device (904). For example, an output port of an integrated pump cap for a colorant container can be coupled to an input of the injection molding device.

A dosing amount of colorant for each injection molding cycle is determined (906). For example, a user can input parameters to the injection molding device or to a control interface for a motor that drives the pump of the integrated pump cap. In some implementations, commands are associated with a timing cycle for the injection molding machine such that the precise amount of colorant can be dosed for each molding cycle.

The injection molding cycle is initiated (908). Initiating an injection molding cycle can include releasing base plastic material from a hopper into a heating portion of the injection molding device to melt the base plastic material. The determined dose of liquid colorant is added to the melting or melted base plastic material (910).

Melted colored plastic is then injected into a mold cavity to form a final color molded plastic (912). The colored molded plastic is then removed from the injection mold (914).

As discussed in conjunction with FIG. 8, liquids other than colorants may be dispensed and molding systems other than injection molding systems may be used. The operational principles of these alternatives can be understood from the block diagram of FIG. 9 too.

The liquid dispenser can be used to dispense liquids for use in a variety of processes including extrusion, blow molding, film production, etc. In particular, liquid colorants can be used to color various products (e.g., bottles). In some other implementations, the liquid dispenser can be used to dispense colorants for the coloring of waxes for candles and wine bottle seals, to dispense catalysts for thermoset plastics, and to dispense single and multiple component adhesives and sealants.

The operations described in this specification, in particular, processing commands for a motor to drive a pump to dispense a specified amount of liquid, can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question; e.g., code that constitutes processor firmware, a protocol stack, a database management system, an operating system, a cross-platform runtime environment, a virtual machine, or a combination of one or more of these. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program can be deployed to be executed on one computer or on multiple computers that are located at one site or distributed across multiple sites and interconnected by a communication network.

Alternatively or in addition, the program instructions can be encoded on or can be included in a computer storage medium, a computer-readable storage device, a computer-readable storage substrate, a random or serial access memory array or device, or a combination of one or more of these. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The invention may be represented by numerous embodiments.

The liquid container comprises an outer container and an inner liner. The outer container may be rigid and the inner liner my be flexible.

The rigid outer container may have an air hole and the flexible inner liner may collapse as liquid is withdrawn from the liquid container. The liquid container may be pressurized. The liquid container may be positioned above the integrated pump cap when liquid is being dispensed from the liquid container. Liquid may flow from the liquid container under the force of gravity during use.

The liquid container may be positioned above the motor when liquid is being dispensed from the liquid container. The liquid container may be positioned below the integrated pump cap when liquid is being dispensed from the liquid container. The integrated pump cap may be removably coupled to the liquid container, e.g., by a threaded ring. The threaded ring may engage corresponding threads on the liquid container. The integrated pump cap may be removably coupled to the liquid container by a quick connector. The integrated pump cap may be coupled to the liquid container by a weld or an adhesive. The amount of liquid that is dispensed from the liquid container may be based on the weight of the liquid or on the volume of the liquid. The pump may be a G-rotor pump, a peristaltic pump, a syringe pump or an elastic diaphragm pump. The device may further comprise a motor. The integrated pump cap includes a motor coupler for coupling the pump to the motor. The motor may be an electric motor, a pneumatic motor,
a hydraulic motor, a piezo-electric motor, or a mechanical motor. The motor may transfer rotational energy to the motor coupler, or the motor may transfer linear energy to the motor coupler. The integrated pump cap may further include a first rotor that is coupled to a shaft that is coupled to the motor coupler. The integrated pump cap may further include a second rotor that moves in response to movement of the first rotor. The first rotor may include at least one lobe and the second rotor may include at least one slot, the at least one lobe on the first rotor engaging the at least one slot on the second rotor to move the second rotor in response to movement of the first rotor, and wherein the number of lobes on the first rotor may be different than the number of slots on the second rotor.

The shaft may intersect the first rotor substantially in the center thereof and may intersect the second rotor off-center thereof. The motor may further include a controller that can be programmed to control operation of the motor. The device may be a molding apparatus. The molding apparatus may be an injection molding apparatus, an injection blow molding apparatus, a blow molding apparatus, or an extrusion head. The molding apparatus may further include a heater for melting plastic resin. The liquid that is dispensed by the liquid container may be a colorant e.g., a colorant used to color plastic resin that is received by the molding apparatus. The plastic resin may have a neutral color and the amount of liquid colorant that is dispensed may be selected to impart a tailored color to the plastic resin. The liquid that is dispensed from the liquid container may be selected from the group consisting of adhesives, cements, colorants, coatings, detergents, epoxies, dyes, fillers, nano-materials, oils, paints, pastes, pigments, polymer additives, sealants, stains, toners, varnishes, and waxes.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims,

## Claims

1. A device comprising
a liquid container (104, 200);
a lid for closing the liquid container (104, 200), the lid being coupled to the liquid container (104, 200), the lid comprising an integrated pump cap (106, 202, 300), the integrated pump cap (106, 202, 300) comprising:
a pump (404) coupled to an intake port to the liquid container (104, 200);
an output port (208) configured to dispense liquid from the liquid container (104, 200); and
a motor coupler (206) comprising teeth to engage corresponding teeth in a compatible motor base (102), the motor coupler (206) being rotatable to drive the pump (404) so that contents of the liquid container (104, 200) can be dispensed through the output port (208);
the device being **characterized in that** the liquid container (104, 200) comprises an outer container (203) and an inner liner (205), wherein the inner liner (205) collapses as liquid is withdrawn from the inner liner (205) of the liquid container (104, 200).

2. A system (100) comprising:
the device of claim 1, and further comprising:
a motor base (102) comprising teeth; and
a device configured to receive liquid dispensed from the output port;
wherein the teeth on the motor base (102) are engaged with the teeth on the motor coupler (206) to drive the pump (404) to dispense a specified amount of liquid into the device.

3. A method (700) for dispensing a specified amount of liquid comprising:
receiving a command to dispense a specified amount of liquid;
initiating a motor in a motor base (102) coupled to a liquid container (104, 200), the liquid container (104, 200) being closed by a lid, the lid being coupled to the liquid container (104, 200), the lid comprising an integrated pump cap (106, 202, 300), the integrated pump cap (106, 202, 300) comprising:
a pump (404) coupled to an intake port to the container;
an output port (208) configured to dispense liquid from the liquid container (104, 200); and
a motor coupler (206) comprising teeth to engage corresponding teeth in the motor base (102), the motor coupler (206) being rotatable to drive the pump (404) so that contents of the liquid container (104, 200) can be dispensed through the output port (208); and
stopping the motor when the specified amount of liquid has been dispensed from the liquid container (104, 200);
the method being **characterized in that** the liquid container (104, 200) comprises an outer container (203) and an inner liner (205), wherein the inner liner (205) collapses as liquid is withdrawn from the inner liner (205) of the liquid container (104, 200).

4. A device, system or method according to any preceding claim, wherein the lid closes the outer container (203) and the inner liner (205).

5. A device, system or method according to any preceding claim wherein the liquid container (104, 200) is pressurized.

6. A device, system or method according to any preceding claim wherein the liquid container (104, 200) is positioned above the integrated pump cap (106, 202, 300) when liquid is being dispensed from the liquid container (104, 200):

7. A device, system or method according to any preceding claim wherein the integrated pump cap (106, 202, 300) is removably coupled to the liquid container (104, 200).

8. A device, system or method according to any preceding claim wherein the integrated pump cap (106, 202, 300) is removably coupled to the liquid container (104, 200) by a threaded ring (204).

9. A device, system or method according to any of claims 1 to 7 wherein the integrated pump cap (106, 202, 300) is removably coupled to the liquid container (104, 200) by a quick connector.

10. A device, system or method according to any one of claims 1 to 9 comprising a first rotor (506) and a second rotor (508) that moves in response to movement of the first rotor (506), wherein the first rotor (506) includes at least one lobe and the second rotor (508) includes at least one slot, the at least one lobe on the first rotor (506) engaging the at least one slot on the second rotor (508) to move the second rotor (508) in response to movement of the first rotor (506), and further wherein the number of lobes on the first rotor (506) is different than the number of slots on the second rotor (508), whereby the pump (404) is coupled to the motor.

11. A system according to any of claims 2 and 4 to 10, wherein the device is a molding apparatus.

12. A system according to claim 11 wherein the molding apparatus is an injection molding apparatus.

13. A device, system or method according to any preceding claim wherein the liquid that is dispensed by the liquid container (104, 200) is a colorant.

14. A system according to claim 13 wherein the liquid that is dispensed by the liquid container (104, 200) is a colorant that is used to color plastic resin that is received by the molding apparatus.

## Patentansprüche

1. Vorrichtung, umfassend:
einen Flüssigkeitsbehälter (104, 200);
einen Deckel zum Schließen des Flüssigkeitsbehälters (104, 200), wobei der Deckel an den Flüssigkeitsbehälter (104, 200) gekoppelt ist, wobei der Deckel eine integrierte Pumpenkappe (106, 202, 300) umfasst, wobei die integrierte Pumpenkappe (106, 202, 300) Folgendes umfasst:
eine Pumpe (404), die an einen Einlassanschluss an den Flüssigkeitsbehälter (104, 200) gekoppelt ist;
einen Ausgangsanschluss (208), der konfiguriert ist, um Flüssigkeit vom Flüssigkeitsbehälter (104, 200) abzugeben; und
einen Motorkoppler (206), der Zähne umfasst, um in entsprechende Zähne in einem kompatiblen Motorunterteil (102) einzugreifen, wobei der Motorkoppler (206) drehbar ist, um die Pumpe (404) anzutreiben, so dass Inhalte des Flüssigkeitsbehälters (104, 200) durch den Ausgangsanschluss (208) abgegeben werden können;
wobei die Vorrichtung **dadurch gekennzeichnet ist, dass** der Flüssigkeitsbehälter (104, 200) einen äußeren Behälter (203) und eine innere Verkleidung (205) umfasst, wobei die innere Verkleidung (205) sich zusammenfaltet, während Flüssigkeit von der inneren Verkleidung (205) des Flüssigkeitsbehälters (104, 200) entnommen wird.

2. System (100), umfassend:
die Vorrichtung nach Anspruch 1 und ferner umfassend:
ein Motorunterteil (102), das Zähne umfasst; und
eine Vorrichtung, die konfiguriert ist, um vom Ausgangsanschluss abgegebene Flüssigkeit aufzunehmen;
wobei die Zähne auf dem Motorunterteil (102) mit den Zähnen am Motorkoppler (206) eingreifen, um die Pumpe (404) anzutreiben, um eine vorgegebene Flüssigkeitsmenge in die Vorrichtung abzugeben.

3. Verfahren (700) zum Abgeben einer vorgegebenen Flüssigkeitsmenge, umfassend:
Empfangen eines Befehls, um eine vorgegebene Flüssigkeitsmenge abzugeben;
Initiieren eines Motors in einem Motorunterteil (102), gekoppelt mit einem Flüssigkeitsbehälter (104, 200), wobei der Flüssigkeitsbehälter (104, 200) durch einen Deckel geschlossen ist, wobei der Deckel an den Flüssigkeitsbehälter (104, 200) gekoppelt ist, wobei der Deckel eine integrierte Pumpenkappe (106, 202, 300) umfasst, wobei die integrierte Pumpenkappe (106, 202, 300) Folgendes umfasst:
eine Pumpe (404), die an einen Einlassanschluss an den Behälter gekoppelt ist;
einen Ausgangsanschluss (208), der konfiguriert ist, um Flüssigkeit vom Flüssigkeitsbehälter (104, 200) abzugeben; und
einen Motorkoppler (206), der Zähne umfasst, um in entsprechende Zähne im Motorunterteil (102) einzugreifen, wobei der Motorkoppler (206) drehbar ist, um die Pumpe (404) anzutreiben, so dass Inhalte des Flüssigkeitsbehälters (104, 200) durch den Ausgangsanschluss (208) abgegeben werden können; und
Anhalten des Motors, wenn die vorgegebene Flüssigkeitsmenge von dem Flüssigkeitsbehälter (104, 200) abgegeben wurde;
wobei das Verfahren **dadurch gekennzeichnet ist, dass** der Flüssigkeitsbehälter (104, 200) einen äußeren Behälter (203) und eine innere Verkleidung (205) umfasst, wobei die innere Verkleidung (205) sich zusammenfaltet, während Flüssigkeit von der inneren Verkleidung (205) des Flüssigkeitsbehälters (104, 200) entnommen wird.

4. Vorrichtung, System oder Verfahren nach einem der vorstehenden Ansprüche, wobei der Deckel den äußeren Behälter (203) und die innere Verkleidung (205) schließt.

5. Vorrichtung, System oder Verfahren nach einem der vorstehenden Ansprüche, wobei der Flüssigkeitsbehälter (104, 200) unter Druck steht.

6. Vorrichtung, System oder Verfahren nach einem der vorstehenden Ansprüchen, wobei der Flüssigkeitsbehälter (104, 200) über der integrierten Pumpenkappe (106, 202, 300) positioniert ist, wenn Flüssigkeit von dem Flüssigkeitsbehälter (104, 200) abgegeben wird.

7. Vorrichtung, System oder Verfahren nach einem der vorstehenden Ansprüche, wobei die integrierte Pumpenkappe (106, 202, 300) abnehmbar an den Flüssigkeitsbehälter (104, 200) gekoppelt ist.

8. Vorrichtung, System oder Verfahren nach einem der vorstehenden Ansprüche, wobei die integrierte Pumpenkappe (106, 202, 300) durch einen Gewindering (204) abnehmbar an den Flüssigkeitsbehälter (104, 200) gekoppelt ist.

9. Vorrichtung, System oder Verfahren nach einem der Ansprüche 1 bis 7, wobei die integrierte Pumpenkappe (106, 202, 300) durch einen Schnellanschluss abnehmbar an den Flüssigkeitsbehälter (104, 200) gekoppelt ist.

10. Vorrichtung, System oder Verfahren nach einem der Ansprüche 1 bis 9, umfassend einen ersten Rotor (506) und einen zweiten Rotor (508), der sich als Reaktion auf Bewegung des ersten Rotors (506) bewegt, wobei der erste Rotor (506) mindestens einen Nocken umfasst und der zweite Rotor (508) mindestens eine Aussparung umfasst, wobei der mindestens eine Nocken auf dem ersten Rotor (506) in die mindestens eine Aussparung auf dem zweiten Rotor (508) eingreift, um den zweiten Rotor (508) als Reaktion auf Bewegung des ersten Rotors (506) zu bewegen, und wobei ferner die Anzahl der Nocken auf dem ersten Rotor (506) anders als die Anzahl der Aussparungen auf dem zweiten Rotor (508) ist, wodurch die Pumpe (404) mit dem Motor gekoppelt ist.

11. System nach einem der Ansprüche 2 und 4 bis 10, wobei die Vorrichtung eine Formanlage ist.

12. System nach Anspruch 11, wobei die Formanlage eine Spritzgussanlage ist.

13. Vorrichtung, System oder Verfahren nach einem der vorstehenden Ansprüche, wobei die Flüssigkeit, die vom Flüssigkeitsbehälter (104, 200) abgegeben wird, ein Farbstoff ist.

14. System nach Anspruch 13, wobei die Flüssigkeit, die von dem Flüssigkeitsbehälter (104, 200) abgegeben wird, ein Farbstoff ist, der verwendet wird, um Kunststoffharz zu färben, das von der Formanlage aufgenommen wird.

## Revendications

1. Dispositif, comprenant
un récipient pour liquide (104, 200) ;
un couvercle pour fermer le récipient pour liquide (104, 200), le couvercle étant accouplé au récipient pour liquide (104, 200), le couvercle comprenant un capuchon de pompe intégré (106, 202, 300), le capuchon de pompe intégré (106, 202, 300) comprenant :
une pompe (404) accouplée à un orifice d'admission vers le récipient pour liquide (104, 200) ;
un orifice de sortie (208) conçu pour distribuer du liquide depuis le récipient pour liquide (104, 200) ; et
un coupleur de moteur (206) comprenant des dents pour mettre en prise des dents correspondantes dans une base de moteur compatible (102), le coupleur de moteur (206) pouvant être mis en rotation afin d'entraîner la pompe (404) de sorte que le contenu du récipient pour liquide (104, 200) puisse être distribué à travers l'orifice de sortie (208) ;
le dispositif étant **caractérisé en ce que** le récipient pour liquide (104, 200) comprend un récipient externe (203) et un revêtement interne (205), le revêtement interne (205) s'aplatissant lorsque du liquide est retiré du revêtement interne (205) du récipient pour liquide (104, 200).

2. Système (100) comprenant:
le dispositif de la revendication 1, et comprenant en outre :
une base de moteur (102) comprenant des dents ; et
un dispositif conçu pour recevoir le liquide distribué depuis l'orifice de sortie ;
dans lequel les dents sur la base de moteur (102) sont en prise avec les dents sur le coupleur de moteur (206) afin d'entraîner la pompe (404) à distribuer une quantité spécifiée de liquide dans le dispositif.

3. Procédé (700) de distribution d'une quantité spécifiée de liquide comprenant
la réception d'une instruction pour distribuer une quantité spécifiée de liquide ;
l'initiation d'un moteur dans une base de moteur (102) accouplée à un récipient pour liquide (104, 200), le récipient pour liquide (104, 200) étant fermé par un couvercle, le couvercle étant accouplé au récipient pour liquide (104, 200), le couvercle comprenant un capuchon de pompe intégré (106, 202, 300), le capuchon de pompe intégré (106, 202, 300) comprenant :
une pompe (404) accouplée à un orifice d'admission vers le récipient ;
un orifice de sortie (208) conçu pour distribuer du liquide depuis le récipient pour liquide (104, 200) ; et
un coupleur de moteur (206) comprenant des dents pour mettre en prise des dents correspondantes dans la base de moteur (102), le coupleur de moteur (206) pouvant être mis en rotation afin d'entraîner la pompe (404) de sorte que le contenu du récipient pour liquide (104, 200) puisse être distribué à travers l'orifice de sortie (208) ; et
l'arrêt du moteur lorsque la quantité spécifiée de liquide a été distribuée depuis le récipient pour liquide (104, 200) ;
le procédé étant **caractérisé en ce que** le récipient pour liquide (104, 200) comprend un récipient externe (203) et un revêtement interne (205), le revêtement interne (205) s'aplatissant lorsque du liquide est retiré du revêtement interne (205) du récipient pour liquide (104, 200).

4. Dispositif, système ou procédé selon l'une quelconque des revendications précédentes, dans lequel le couvercle ferme le récipient externe (203) et le revêtement interne (205).

5. Dispositif, système ou procédé selon l'une quelconque des revendications précédentes, dans lequel le récipient pour liquide (104, 200) est mis sous pression.

6. Dispositif, système ou procédé selon l'une quelconque des revendications précédentes, dans lequel le récipient pour liquide (104, 200) est positionné au-dessus du capuchon de pompe intégré (106, 202, 300) lorsque du liquide est en cours de distribution depuis le récipient pour liquide (104, 200).

7. Dispositif, système ou procédé selon l'une quelconque des revendications précédentes, dans lequel le capuchon de pompe intégré (106, 202, 300) est accouplé de façon amovible au récipient pour liquide (104, 200).

8. Dispositif, système ou procédé selon l'une quelconque des revendications précédentes, dans lequel le capuchon de pompe intégré (106, 202, 300) est accouplé de façon amovible au récipient pour liquide (104, 200) par une bague filetée (204).

9. Dispositif, système ou procédé selon l'une quelconque des revendications 1 à 7, dans lequel le capuchon de pompe intégré (106, 202, 300) est accouplé de façon amovible au récipient pour liquide (104, 200) par un raccord rapide.

10. Dispositif, système ou procédé selon l'une quelconque des revendications 1 à 9 comprenant un premier rotor (506) et un second rotor (508) qui se déplace en réponse au mouvement du premier rotor (506), dans lequel le premier rotor (506) contient au moins un lobe et le second rotor (508) contient au moins une fente, le au moins un lobe sur le premier rotor (506) venant en prise avec la au moins une fente sur le second rotor (508) afin de déplacer le second rotor (508) en réponse au mouvement du premier rotor (506) et dans lequel en outre le nombre de lobes sur le premier rotor (506) est différent du nombre de fentes sur le second rotor (508), moyennant quoi la pompe (404) est accouplée au moteur.

11. Système selon l'une quelconque des revendications 2 et 4 à 10, dans lequel le dispositif est un appareil de moulage.

12. Système selon la revendication 11, dans lequel l'appareil de moulage est un appareil de moulage par injection.

13. Dispositif, système ou procédé selon l'une quelconque des revendications précédentes, dans lequel le liquide qui est distribué par le récipient pour liquide (104, 200) est un colorant.

14. Système selon la revendication 13, dans lequel le liquide qui est distribué par le récipient pour liquide (104, 200) est un colorant qui est utilisé pour colorer une résine plastique qui est reçue par l'appareil de moulage.
